# EUROPÄISCHE PATENTSCHRIFT

(11) **EP 2 011 577 B1**
(45) Veröffentlichungstag und Bekanntmachung des Hinweises auf die Patenterteilung: **20.02.2019**
(21) Anmeldenummer: 08159681.9
(22) Anmeldetag: 04.07.2008
(51) Int. Cl.: B06B 1/02, A61C 1/07, A61C 1/00

(54) **Verfahren zum Betrieb einer dentalen Ultraschallvorrichtung sowie dentale Ultraschallvorrichtung**
Method for operating a dental ultrasonic device and dental ultrasonic device
Procédé de fonctionnement d'un dispositif à ultrasons dentaire tout comme dispositif à ultrasons dentaire

(30) Priorität: 04.07.2007 DE 102007031168
(43) Veröffentlichungstag der Anmeldung: 07.01.2009
(73) Patentinhaber: Sirona Dental Systems GmbH, 64625 Bensheim (DE)
(72) Erfinder: Kulhanek, Christian, 64683 Einhausen (DE); Rein, Matthias, 64653 Lorsch (DE); Oehme, Bernd, 55128 Mainz (DE)
(74) Vertreter: Sommer, Peter

(56) Entgegenhaltungen:
- DE-T2- 69 827 659
- US-A- 5 277 065
- US-A- 5 730 594
- US-A- 5 991 234
- US-A1- 2006 269 900

## Beschreibung

Die Erfindung betrifft ein Verfahren zum Betrieb einer dentalen Ultraschallvorrichtung mit einer Anregungsfrequenz f_{A}, wobei die Ultraschallvorrichtung ein Handstück, umfassend einen Ultraschallantrieb mit einer veränderbaren Ausgangsfrequenz, eine von dem Ultraschallantrieb angetriebene Werkzeugspitze und eine Regelungseinheit zur Regelung der Anregungsfrequenz f_{A} des Ultraschallantriebes, wobei die Regelungseinheit bei der Inbetriebnahme der Ultraschallvorrichtung eine Resonanzfrequenz f_{R} des Ultraschallantriebes mit der Werkzeugspitze bestimmt und den Ultraschallantrieb auf eine der Resonanzfrequenz f_{R} entsprechenden Anregungsfrequenz f_{A} regelt.

Die Erfindung betrifft weiterhin eine dentale Ultraschallvorrichtung vorgenannten Typs zur Durchführung des Verfahrens.

### Stand der Technik

Bei dentalen Ultraschallvorrichtungen, z. B. Scaler, ist es nötig, bei jedem Einschalten die Resonanzfrequenz des schwingenden Systems, bestehend aus einem Ultraschallantrieb sowie einer von dem Ultraschallantrieb angetriebenen Werkzeugspitze, zu bestimmen. Die Werkzeugspitze wird bei der Bearbeitung abgenutzt oder kann Deformationen erfahren, was sich jeweils auf die Resonanzfrequenz des Systems auswirkt.

Darüber hinaus hängt die Resonanzfrequenz auch von dem Belastungszustand der Werkzeugspitze ab. Es findet eine merkliche Verschiebung der Resonanzfrequenz statt, wenn die Werkzeugspitze an einem zu bearbeitenden Zahn anliegt. Bei konstanter Anregungsfrequenz steigt darüber hinaus die Impedanz und die Schwingungsamplitude bzw. die Leistung fällt ab.

Die DE 600 01 416 T2 offenbart eine Kontrollvorrichtung für ein zahnärztliches Ultraschallhandstück, die einen piezoelektrischen Transducer eines Schwingungserzeugers des Handstücks regelt. Die Vorrichtung ist in der Lage, die Serienresonanzfrequenz unabhängig von der Art des Gewebes, an das das Instrument herangeführt wird, zu halten. Dafür sind zwei Stromkreise vorgesehen, ein Arbeitsstromkreis und ein Steuerstromkreis, wobei der Steuerstromkreis die Phasenverschiebung zwischen Strom und Spannung misst und elektrisch kompensiert.

Die DE 39 25 459 A1 offenbart einen Ultraschallerzeuger mit einem piezoelektrischen Wandler. Der Treiberkreis des piezoelektrischen Wandlers ist aus einem durch einen Mikrocomputer gesteuerten Schaltregler gebildet, der einen im Tastverhältnis und in der Frequenz in Abhängigkeit von der mit einer Messschaltung erfassten Impedanz des Wandlers gesteuerten Oszillator bildet. Die Frequenz und das Tastverhältnis werden dabei so geregelt, dass ein bestimmter Impedanz-Sollwert erreicht wird. Die Impedanz-Messschaltung ist dabei ein Integrator, der als Tiefpass ausgebildet ist. Die Steuereinrichtung steuert eine Anpassung des Tastverhältnisses oder eine Anpassung der Frequenz des Schaltreglers mittels einer dem Schaltregler zugeführten Regelspannung.

Bei einem solchen mikroprozessorgesteuerten System wird entweder eine Resonanz- oder eine Lastregelung für die Ermittlung der Anregungsfrequenz verwendet. Beim Einschalten im Leerlaufbetrieb wird in der Regel die Resonanzregelung verwendet, bei der die Resonanzfrequenz ermittelt und als Anregungsfrequenz eingesetzt wird. Danach, im Betrieb, wird auf die Lastregelung umgeschaltet. Diese gewährleistet einen möglichst konstanten Strom zwecks Abgabe einer möglichst konstanten Leistung. Eine mögliche lastabhängige Verschiebung der Resonanzfrequenz bleibt dabei unberücksichtigt. Anhand von Sekundärmerkmalen wie z. B. eine schnelle Stromänderung, die auf einen Lastfall zurückführt, oder eine langsame Stromänderung, die auf ein Verlassen der Resonanzfrequenz zurückführt, wird die Resonanz- oder die Lastregelung eingestellt. Das System wird somit meistens außerhalb des optimalen Arbeitspunkts, also außerhalb der Resonanzfrequenz mit der eigentlich gewünschten Leistung betrieben.

Aus der nachveröffentlichten DE 10 2006 008 517 A1 ist ein Verfahren zum Betrieb einer Ultraschallvorrichtung sowie eine dentale Ultraschallvorrichtung bekannt, bei der Resonanzfrequenz des Ultraschallantriebs über Mittel zur Festigung einer Wirkleistung bestimmt wird, wobei während dieser Feststellung die Ausgangsleistung höchstens der vorgewählten Bearbeitungsleistung entspricht. Bei der Inbetriebnahme der Ultraschallvorrichtung wird eine vorgegebener Frequenzbereich mit einer vorgegebenen Ausgangsleistung durchfahren und eine Resonanzfrequenz des Ultraschallantriebs mit der Werkzeugspitze bestimmt. Die Ultraschallvorrichtung verfügt dabei über Mittel zur Messung einer Wirkleistung des Ultraschallantriebs, die mit einer Regelungseinheit zusammenwirken.

Aus der EP 1 369 185 A2 ist eine Vorrichtung zum Antreiben eines Ultraschallwandlers mit einer optimalen Frequenz bekannt, bei der ein Momentanstrom erfasst und ein Spitzenwert dafür festgestellt wird. Erreicht der Momentanstrom einen derartigen Spitzenwert, wird die Frequenz festgehalten und die Ultraschallvorrichtung mit dieser Frequenz betrieben.

Aus der US 2006/0269900 A1 ist bekannt, die Anregungsfrequenz mittels eines Regelkreises zu steuern, welcher die Phasenverschiebung zwischen Strom- und Spannungssignalen nutzt. Es ist daher die Aufgabe der Erfindung, ein Verfahren zum Betrieb einer dentalen Ultraschallvorrichtung und eine Ultraschallvorrichtung bereitzustellen, die bei möglichst gleichbleibender Leistung eine zuverläsige Nachführung der Resonanzfrequenz im Betrieb mit einfachen Mitteln gewährleisten.

Die Aufgabe der Erfindung wird gelöst durch das in den unabhängigen Ansprüchen offenbarte Verfahren und die Vorrichtung. Vorteilhafte Ausgestaltungen der Erfindungen sind in den Unteransprüchen wiedergegeben.

Dadurch, dass im Betrieb zwecks Bestimmung der Resonanzfrequenz f_{R} mehrmals eine Anregungspause eingelegt wird, wobei während der Anregungspause das Schwingungsverhalten der Werkzeugspitze von der Regelungseinheit erfasst und daraus die Resonanzfrequenz f_{R} etwa mittels einer Fourier-Analyse wie einer FFT, einer DFT oder einer Zoom-FFT ermittelt wird, kann die Ultraschallvorrichtung in einem optimalen Arbeitspunkt betrieben werden. Neben der Ermittlung der Resonszfrequenz f_{R} in der Anregungspause und einer Nachführung der Anregungsfrequenz f_{A} kann während der Anregung im Betrieb unabhängig davon ein Nachschieben der Leistung, also eine Nachregelung des Stromes erfolgen. Somit ist ein gleichmäßiges und komfortables Arbeiten über eine beliebig lange Zeit unter einem beliebigen Lastfall möglich. Anstelle einer einzigen Resonanzfrequenz können auch Resonanzfrequenzen unterschiedlicher Ordnung erfasst werden. Zu Beginn des Betriebes wird die Ultraschallvorrichtung mit einem kurzen Einzelimpuls, z. B. ein Rechteckimpuls mit 1µs oder eine Impulsfolge, bzw. einem Chirp angeregt und über eine Fourier-Analyse wie z. B. eine DFT, eine Zoom-FFT oder eine FFT ausgewertet. Da das Schwingungssystem eine ausgeprägte Resonanz hat, lässt sich der Arbeitspunkt bzw. die Resonanzfrequenz f_{R} gut messen. Der Impuls kann auch aus einer Halbwelle oder einem Teil einer Halbwelle bestehen.

Bei bekannten Ultraschallvorrichtungen kann ein Abfall des Stromes entweder auf ein Verlassen des Resonanzbereichs oder aber auf eine Last zurückzuführen sein. In den Pausen wird stetig die Resonanzfrequenz ermittelt, so dass der Betrieb mit der Resonanzfrequenz gewährleistet ist. Ein Nachschieben der Leistung, also eine Nachregelung des Stromes, kann jederzeit erfolgen. Die Resonanzfrequenz bewegt sich während des Betriebs in einem Frequenzbereichsfenster von etwa 8 kHz. In diesem Frequenzbereichsfenster ist ein einziges Resonanz-Maximum vorhanden. Ungeachtet des Lastfalles, also der tatsächlichen Belastung des Werkzeuges, lässt sich die Resonanzfrequenz mittels einer FFT ermitteln, d.h. auch bei einer sehr hohen Last, die eine Dämpfung der Amplitude hervorruft, ist die Resonanzfrequenz zu ermitteln. Damit ist der Betrieb in der Resonanzfrequenz gewährleistet und bei der Stromregelung kann allein auf die gewünschte Leistung abgestellt werden. Damit wird die Trennung der Zustände Last und Resonanz erreicht.

Hierbei kann es von Vorteil sein, wenn die Anregungspause über eine Dauer von maximal 50 ms, vorteilhafterweise maximal 10 ms oder noch weiter vorteilhafterweise von maximal 5 ms erfolgt. Anregungspausen von weniger als 10 ms sind vom Anwender nicht wahrnehmbar, d.h. es ist kein Leistungsabfall spürbar.

Diesbezüglich kann es von Vorteil sein, wenn eine Anregungspause derart eingestellt wird, dass der Leistungsabfall maximal 20 %, vorteilhafterweise maximal 10 % oder noch weiter vorteilhafterweise von maximal 5 % groß ist. Die Anregungspausen sollten den Normalbetrieb nicht wesentlich beeinflussen. Ein erhöhter Leistungsabfall aufgrund längerer Anregungspausen wäre nachteilig, aber möglich.

Dabei kann es von Vorteil sein, wenn die Anregungspause und die damit verbundene Bestimmung der Resonanzfrequenz f_{R} regelmäßig mit einer Frequenz f wiederholt wird, wobei die Frequenz f zwischen 1 Hz und 100 Hz, vorzugsweise 15 Hz beträgt. Die damit erreichte Auflösung des Steuerungsprozesses und Nachführung der Anregungsfrequenz f_{A} gewährleisten den Betrieb in dem gewünschten Betriebspunkt. Abweichungen hiervon sind nahezu zu vernachlässigen. Während des Betriebs wird in entsprechend kurzen Abständen eine FFT durchgeführt, der optimale Arbeitspunkt bestimmt und die Ultraschallvorrichtung ständig im Arbeitspunkt gehalten. Je größer die Frequenz f gewählt wird, desto kleiner sollte die jeweilige Anregungspause gewählt werden, damit der Leitungsabfall nicht zu stark ausfällt.

Hierzu kann es von Vorteil sein, wenn die Regelungseinheit den Anregungsstrom regelt und unabhängig von der Anregungsfrequenz einen konstanten Strom für den Ultraschallantrieb einstellt, wobei die Stromregelung durch eine Variation der Amplitude A der Anregungsspannung oder durch eine Variation der Impulsbreite der Anregungsspannung erfolgt. Der schnelle und kontinuierlich einsetzende Stromregler gewährleistet einen konstanten Strom für alle Lastfälle. Die Zustände "Last" und "Resonanz" sind somit getrennt. Beide Zustände werden unabhängig voneinander gemessen. Die Charakteristik des Nachschiebens, also des Regelungsverhaltens für den Strom bzw. für die Spannung, kann an die gewünschte Behandlungsmethode wie nachstehend erläutert angepasst werden.

Im Leerlauf der Ultraschallvorrichtung wird vorzugsweise eine minimale Anregungsspannung angelegt, womit das System geschont wird. Im Betrieb wird die Anregungsspannung bzw. der Anregungsstrom je nach gewünschter Arbeitsleistung nachgeregelt. Die Charakteristik des Nachregelns kann je nach Behandlungsmethode flexibel angepasst werden. Zum Glätten der Zahnoberfläche ist es vorteilhaft, die durch den Strom bzw. die Spannung bestimmte Schwingungsamplitude nur gering nachzuregeln, also unterkompensiert zu betreiben. Zum Abtragen der Zahnoberfläche ist von Vorteil, die Schwingungsamplitude stark nachzuschieben, also überkompensiert zu betreiben.

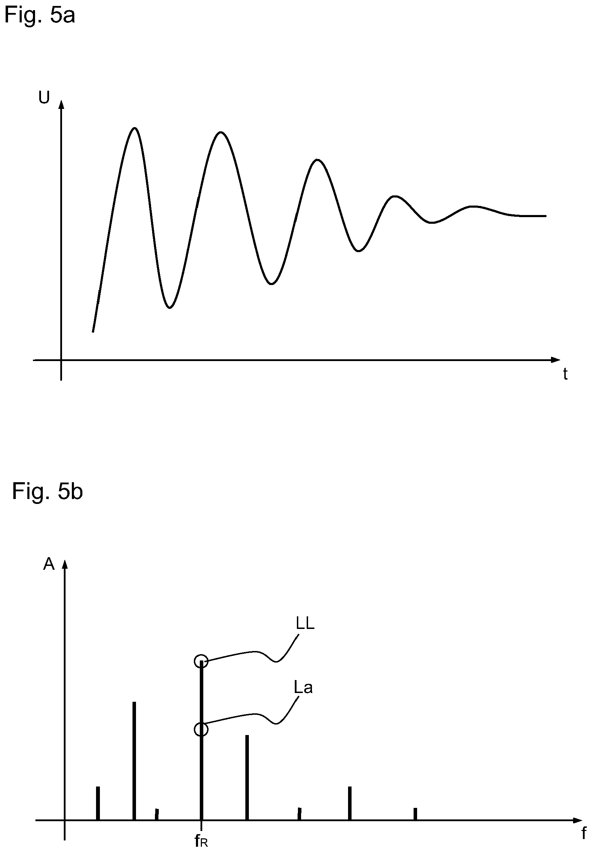

Vorteilhaft kann es hierzu sein, wenn zwecks Ermittlung der Resonanzfrequenz f_{R} eine Fourier-Analyse verwendet wird, wobei mit der Auswertung der Fourier-Analyse zwecks Ermittlung der Resonanzamplituden der Werkzeugspitze auch der Lastzustand der Werkzeugspitze ermittelt wird. Die Amplitude der ermittelten Resonanzfrequenz lässt einen Schluss auf die vorliegende Belastung der Werkzeugspitze zu. Unter Last wird die Amplitude kleiner. Im Leerlauf ist die Amplitude am größten. Dies ist in Fig. 5b dargestellt.

Die Erfindung betrifft auch eine dentale Ultraschallvorrichtung mit einem Handstück, umfassend einen Ultraschallantrieb mit einer veränderbaren Ausgangsfrequenz und eine von dem Ultraschallantrieb angetriebene Werkzeugspitze, weiterhin umfassend eine Regelungseinheit zur Regelung der Anregungsfrequenz f_{A} des Ultraschallantriebes, wobei Mittel zur Generierung einer vorzugsweise regelmäßigen Anregungspause im Betrieb in einer Frequenz f zwischen 1 Hz und 100 Hz und weiterhin Mittel vorhanden sind, über die während der Anregungspause das Schwingungsverhalten der Werkzeugspitze erfassbar und auswertbar ist, wobei die Mittel mit der Regelungseinheit zusammenwirken und eine Anregungspause von maximal 50 ms, vorteilhafterweise maximal 10 ms oder noch weiter vorteilhafterweise von maximal 5 ms einstellbar ist.

Mit einer solchen Ultraschallvorrichtung lässt sich die erfindungsgemäße Trennung von Lastfall und Resonanzfall gewährleisten.

### Kurzbeschreibung der Zeichnungen

Das erfindungsgemäße Verfahren wird anhand der Zeichnungen erläutert. Es zeigen:
- Fig. 1: eine Prinzipskizze einer erfindungsgemäßen dentalen Ultraschallvorrichtung;
- Fig. 2a: ein Flussdiagramm zur Darstellung der erfindungsgemäßen Verfahren;
- Fig. 2b: ein Flussdiagramm zur Darstellung der erfindungsgemäßen Verfahren;
- Fig. 3: ein Diagramm mit der Abhängigkeit des Betrages der Impedanz von der Frequenz;
- Fig. 4: ein Diagramm mit der Abhängigkeit der Wirkleistung von der Frequenz;
- Fig. 5a: eine graphische Darstellung eines abklingenden Spannungsverlaufs;
- Fig. 5b: eine graphische Darstellung der FFT-Analyse.

### Ausführungsform der Erfindung

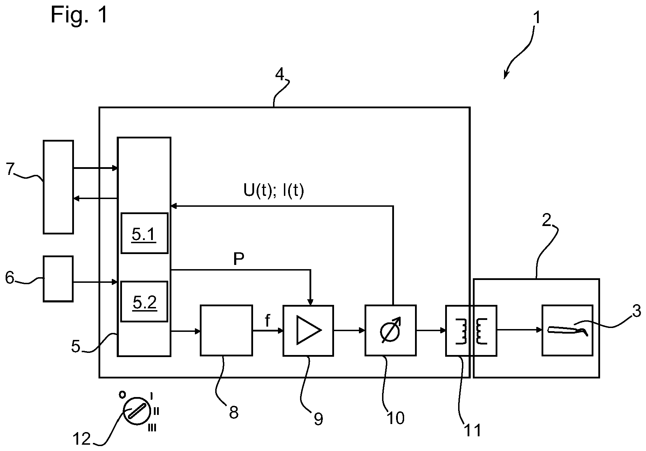

Fig. 1 zeigt eine Prinzipskizze einer erfindungsgemäßen dentalen Ultraschallvorrichtung 1. Die dentale Ultraschallvorrichtung 1 besteht aus einem schematisch dargestellten Handstück 2 mit einer Werkzeugspitze 3. In das Handstück 2 ist ein piezoelektrischer Ultraschallantrieb integriert, der nicht dargestellt ist. Weiterhin ist eine Regelungseinheit 4 zur Regelung des Ultraschallhandstücks 2 vorgesehen.

Die Regelungseinheit 4 weist sowohl erste Mittel 5.1 zur Generierung einer Anregungspause als auch zweite Mittel 5.2 auf, über die während der Anregungspause das Schwingungsverhalten der Werkzeugspitze 3 erfassbar und auswertbar ist.

Den Kern der Regelungseinheit 4 bildet ein Controller 5 mit integrierten Schaltkreisen. Mittels eines an den Controller 5 angeschlossenen Potentiometers 6 und einem Interface 7 erhält der Controller 5 Regelvorgaben zur Regelung des Ultraschallantriebes. Über das Potentiometer 6 wird die gewünschte Bearbeitungsleistung vorgegeben, beispielsweise durch einen nicht dargestellten Fußschalter. Das Interface 7 kann weitere Vorgaben über den Betriebsmodus der Werkzeugspitze 3 geben, beispielsweise die Aggressivität der Werkzeugspitze 3 oder eine Vorgabe über eine maximale Bearbeitungsleistung.

Der Controller 5 kann darüber hinaus Signale an das Interface 7 übergeben, beispielsweise zur Anzeige des Betriebszustandes der Ultraschallvorrichtung 1 an einer nicht dargestellten Anzeigeeinheit.

In Abhängigkeit von den durch das Interface 7 und das Potentiometer 6 eingegebenen Regelvorgaben steuert der Controller 5 einen spannungsgesteuerten Oszillator 8, der in Abhängigkeit von der angelegten Spannung U(t) eine Frequenz f erzeugt. Der Oszillator 8 kann auch Bestandteil des Controllers 5 sein. Der Controller 5 gibt einem Verstärker 9 eine Leistungsvorgabe P, die von der gewählten Bearbeitungsleistung abhängt.

Dem Oszillator 8 und dem Verstärker 9 ist ein Strom- und Spannungsmesser 10 für den Strom I(t) und die Spannung U(t) nachgeschaltet, der den zeitlichen Strom- und Spannungsverlauf erfasst und an den Controller 5 übergibt. Ein Übertrager 11 transformiert die Spannung U(t) hoch und überträgt sie an den piezoelektrischen Ultraschallantrieb.

An der Ultraschallvorrichtung 1 ist ein Stellmittel in Form eines Vorwahlschalters 12 vorgesehen, mit dem man eine Lastkompensation einschalten bzw. einstellen kann, um entweder in der Stellung "0" ein einfaches Glätten des Zahns oder in den Stellungen "I" bis "III" ein Entfernen von Zahnmaterial mit zunehmender Abtragsleistung durchzuführen.

Aufgrund der Tatsache, dass das gesamte System Rückkopplungen erfährt, sind die abgegebene Spannung U(t) und der abgegebene Strom I(t) von dem Schwingungs- und Belastungszustand der Werkzeugspitze 3 abhängig. Diese Abhängigkeit wird in den nachfolgenden Diagrammen erläutert.

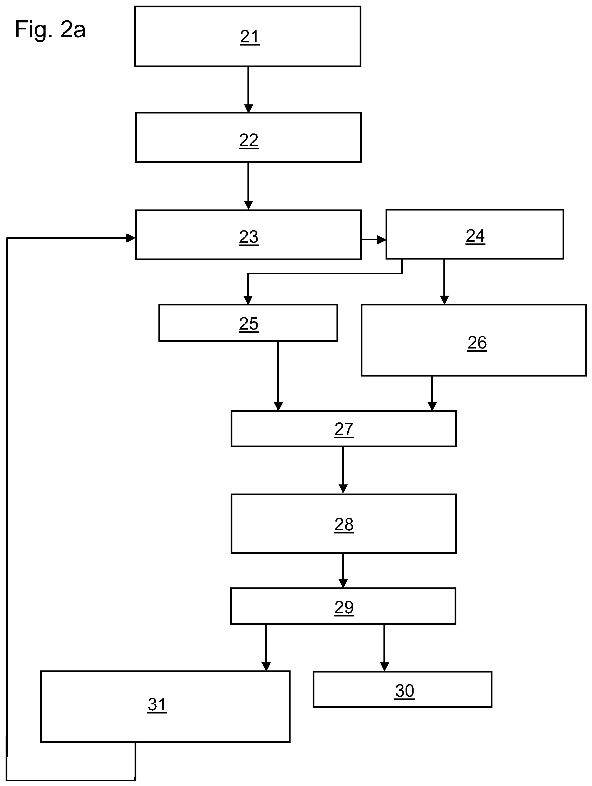

Fig. 2a zeigt ein Flussdiagramm zur Darstellung der erfindungsgemäßen Verfahren.

Nach dem Einschalten der Ultraschallvorrichtung 1 in 21 wird diese zunächst in 22 mit einer Anregungsfrequenz f_{A} betrieben. Da die Ultraschallvorrichtung in der Regel im Leerlauf ist, wird zunächst eine minimale Anregungsspannung bzw. ein minimaler Anregungsstrom angelegt.

Zwecks Bestimmung der Resonanzfrequenz f_{R} wird in 23 eine möglichst abrupte Anregungspause mit einer Länge zwischen 5 ms und 10 ms eingelegt.

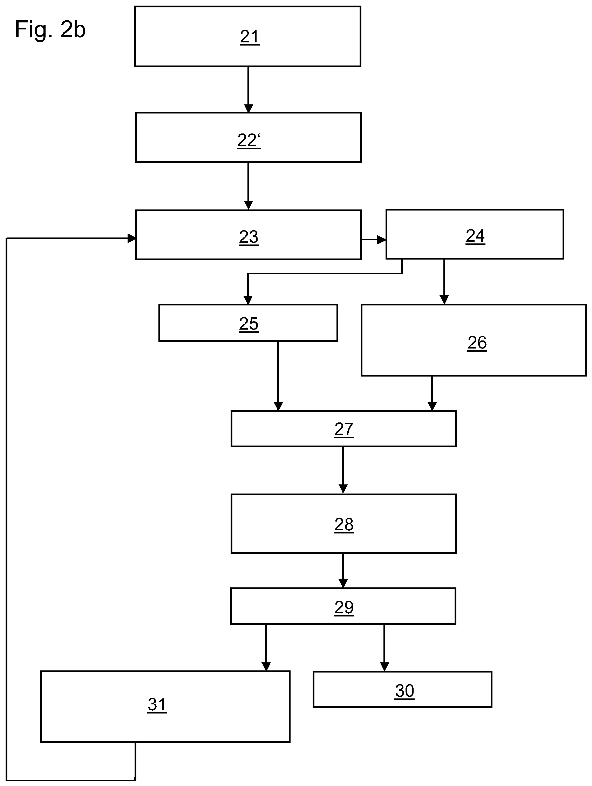

Alternativ kann gemäß Fig. 2b das Anregen in 22' mit einer geschätzten Resonanzfrequenz bzw. "Schätzfrequenz" erfolgen, wobei das Anregen nur sehr kurz bzw. mit einem kurzen Impuls erfolgt, an den sich die abrupte Anregungspause in 23 anschließt.

Während der Anregungspause wird in 24 das abklingende Signal der Ultraschallvorrichtung 1 bzw. das über die Werkzeugspitze 3 im piezoelektrischen Ultraschallantrieb eingekoppelte Signal des Verlaufs der Spannung über der Zeit erfasst.

Unmittelbar nach der Anregungspause wird die Ultraschallvorrichtung 1 in 25 zunächst wieder mit der Anregungsfrequenz f_{A} betrieben. Mittels einer DFT, Zoom-FFT oder FFT wird in 26 die Resonanzfrequenz f_{R} gemäß Fig. 5a, 5b bestimmt. Sobald die Resonanzfrequenz f_{R}, also die Frequenz für die maximale Schwingungsamplitude gemäß Fig. 5b ermittelt ist, wird in 27 die Anregungsfrequenz f_{A} auf die Resonanzfrequenz f_{R} eingestellt. Wenn die Ermittlung der Resonanzfrequenz f_{R} ausreichend schnell, also innerhalb der Anregungspause erfolgt, wird nach der Anregungspause unmittelbar mit der Resonanzfrequenz f_{R} angeregt.

Unter Berücksichtigung der gewünschten Leistung werden in 28 die Anregungsspannung bzw. der Anregungsstrom nachgeführt. Im pausenfreien Betrieb findet die Nachführung ständig statt.

Die Ultraschallvorrichtung 1 ist somit kurz nach dem Einschalten nach einmaligem Durchlaufen vorstehend beschriebener Einstellungsschleife einsatzbereit.

Außer bei der Abfrage des Ausschaltens der Ultraschallvorrichtung 1 in 29 und dem Ende der Bearbeitung in 30 wird in 31 regelmäßig eine Anregungspause eingelegt mit anschließender Nachführung der Anregungsfrequenz f_{A} sowie Nachführung der Leistung.

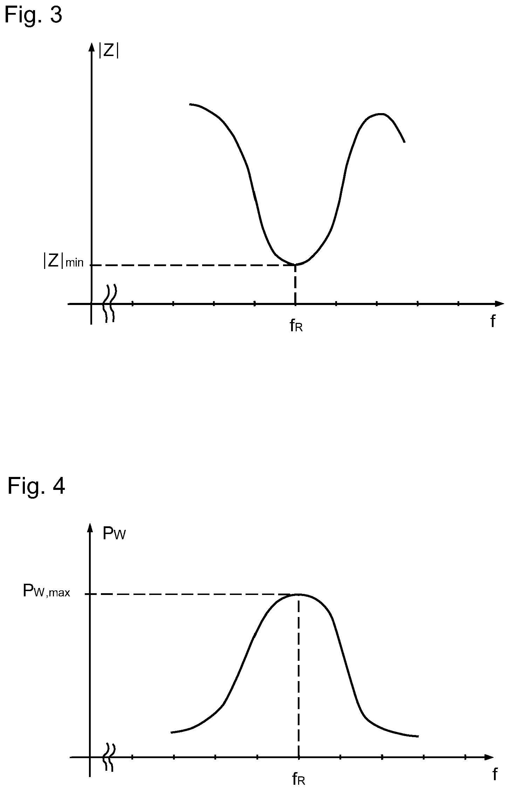

Fig. 3 stellt den Verlauf des Betrages einer Impedanz |Z| in Abhängigkeit von der Frequenz f eines dentalen Ultraschallsystems bzw. dessen Antriebs dar. Bei dem Betrieb mit der Resonanzfrequenz f_{R} schwingen Strom I(t) und Spannung U(t) nahezu gleichphasig, so dass der Betrag der Impedanz |Z| minimal wird und auf |Z|ₘᵢₙ abfällt.

Die Gleichphasigkeit von Strom I(t) und Spannung U(t) bewirkt weiterhin, dass das Produkt aus Strom I(t) und Spannung U(t) und damit auch eine resultierende Wirkleistung P_{W} maximal wird. Wie in Fig. 4 dargestellt wird, fällt die Wirkleistung P_{W} zu beiden Seiten der Resonanzfrequenz f_{R} rasch ab, so dass nur ein schmales Maximum P_{W,max} vorhanden ist. Da die Abtragleistung in einem näherungsweise proportionalen Zusammenhang mit der Wirkleistung P_{W} steht, sollte die dentale Ultraschallvorrichtung 1 immer in der Resonanz, also mit der Resonanzfrequenz f_{R} betrieben werden, um eine optimale Bearbeitungsleistung zur Verfügung zu haben und darüber hinaus einen definierten Schwingungszustand zu halten. Dies gewährleistet die erfindungsgemäße Nachführung der Anregungsfrequenz f_{A}. Somit können auch Frequenzabweichungen der Resonanzfrequenz f_{R} unter Last ständig ausgeglichen werden.

Fig. 5a zeigt das abklingende Signal der Spannung U des Piezoelements der in der Anregungspause befindlichen Ultraschallvorrichtung 1 über der Zeit t. Dieses Spannungssignal wird mittels einer FFT ausgewertet. Das Ergebnis ist in Fig. 5b dargestellt. Bei dem Peak mit der höchsten Amplitude A handelt es sich um die Resonanzfrequenz f_{R}.

Die Amplitude A ist grundsätzlich vom Belastungszustand abhängig. Wie in Fig. 5b im Amplitudenverlauf mit den Kreisen dargestellt ist im Leerlauf der Wert LL der Amplitude A höher als der Wert La der Amplitude A unter Last. Der Wert der Amplitude A würde ausgehend vom Leerlauf LL unter Last LL auf den mit dem Kreis gekennzeichneten Wert La der Amplitude A abfallen. Die FFT kann demnach auch zur Bestimmung des Belastungszustandes des Werkzeuges herangezogen werden.

### Bezugszeichenliste

- 1: Ultraschallvorrichtung
- 2: Handstück, Ultraschallhandstück
- 3: Werkzeugspitze
- 4: Regelungseinheit
- 5: Regelungseinheit, Controller
- 5.1: erste Mittel
- 5.2: zweite Mittel
- 6: Potentiometer
- 7: Interface
- 8: Oszillator
- 9: Verstärker
- 10: Strom- und Spannungsmesser
- 11: Übertrager
- 12: Vorwahlschalter
- A: Amplitude
- f: Frequenz
- f_{A}: Anregungsfrequenz
- f_{R}: Resonanzfrequenz
- I(t): Strom
- La: Wert der Amplitude A
- LL: Wert der Amplitude A
- P: Leistungsvorgabe
- P_{W}: Wirkleistung
- P_{w,max}: maximale Wirkleistung, Maximum
- U: Spannung
- U(t): Spannung
- t: Zeit
- |Z|: Impedanz
- |Z|ₘᵢₙ: minimale Impedanz
- 0: Stellung
- I: Stellung
- II: Stellung
- III: Stellung

## Patentansprüche

1. Verfahren zum Betrieb einer dentalen Ultraschallvorrichtung (1) mit einer Anregungsfrequenz f_{A}, wobei die Ultraschallvorrichtung (1) ein Handstück (2), umfassend einen Ultraschallantrieb mit einer veränderbaren Ausgangsfrequenz, eine von dem Ultraschallantrieb angetriebene Werkzeugspitze (3) und eine Regelungseinheit (5) zur Regelung der Anregungsfrequenz f_{A} des Ultraschallantriebes, wobei die Regelungseinheit (5) bei der Inbetriebnahme der Ultraschallvorrichtung (1) eine Resonanzfrequenz f_{R} des Ultraschallantriebes mit der Werkzeugspitze (3) bestimmt und den Ultraschallantrieb auf eine der Resonanzfrequenz f_{R} entsprechende Anregungsfrequenz f_{A} regelt, **dadurch gekennzeichnet, dass** im Betrieb zwecks Bestimmung der Resonanzfrequenz f_{R} mehrmals eine Anregungspause eingelegt wird, wobei während der Anregungspause das Schwingungsverhalten der Werkzeugspitze (3) von der Regelungseinheit (5) erfasst und daraus die Resonanzfrequenz f_{R} ermittelt wird.

2. Verfahren nach Anspruch 1, **dadurch gekennzeichnet, dass** die Anregungspause über eine Dauer von maximal 50 ms, maximal 10 ms oder maximal 5 ms erfolgt.

3. Verfahren nach Anspruch 1, **dadurch gekennzeichnet, dass** eine Anregungspause derart eingestellt wird, dass der Leistungsabfall maximal 50 %, maximal 10 % oder maximal 5 % groß ist.

4. Verfahren nach einem der Ansprüche 1 bis 3, **dadurch gekennzeichnet, dass** die Anregungspause und die damit verbundene Bestimmung der Resonanzfrequenz f_{R} regelmäßig mit einer Frequenz f wiederholt wird.

5. Verfahren nach Anspruch 4, **dadurch gekennzeichnet, dass** die Frequenz f zwischen 1 Hz und 100 Hz, vorzugsweise 15 Hz beträgt.

6. Verfahren nach einem der Ansprüche 1 bis 5, **dadurch gekennzeichnet, dass** die Regelungseinheit (5) einen Anregungsstrom I regelt und unabhängig von der Anregungsfrequenz f_{A} einen konstanten Strom für den Ultraschallantrieb einstellt.

7. Verfahren nach Anspruch 6, **dadurch gekennzeichnet, dass** die Stromregelung durch eine Variation der Amplitude A einer Anregungsspannung oder durch eine Variation einer Impulsbreite der Anregungsspannung erfolgt.

8. Verfahren nach einem der Ansprüche 1 bis 7, **dadurch gekennzeichnet, dass** zwecks Ermittlung der Resonanzfrequenz f_{R} eine Fourier-Analyse verwendet wird, wobei mit der Auswertung der Fourier-Analyse zwecks Ermittlung der Resonanzamplituden der Werkzeugspitze (3) auch der Lastzustand der Werkzeugspitze (3) ermittelt wird.

9. Dentale Ultraschallvorrichtung (1) mit einem Handstück (2), umfassend einen Ultraschallantrieb mit einer veränderbaren Ausgangsfrequenz und eine von dem Ultraschallantrieb angetriebene Werkzeugspitze (3), und weiterhin umfassend eine Regelungseinheit (5) zur Regelung der Anregungsfrequenz f_{A} des Ultraschallantriebes, **dadurch gekennzeichnet, dass** erste Mittel (5.1) zur Generierung einer Anregungspause im Betrieb vorhanden sind und dass weiterhin zweite Mittel (5.2) vorhanden sind, über die während der Anregungspause das Schwingungsverhalten der Werkzeugspitze (3) erfassbar und auswertbar ist, wobei die ersten Mittel (5.1) und die zweiten Mittel (5.2) mit der Regelungseinheit (5) zusammenwirken.

10. Dentale Ultraschallvorrichtung (1) nach Anspruch 9, **dadurch gekennzeichnet, dass** eine Anregungspause von maximal 50 ms, 10 ms oder 5 ms einstellbar ist.

11. Dentale Ultraschallvorrichtung (1) nach Anspruch 9 oder 10, **dadurch gekennzeichnet, dass** Mittel zur Generierung einer regelmäßigen Anregungspause vorhanden sind.

12. Dentale Ultraschallvorrichtung (1) nach Anspruch 11, **dadurch gekennzeichnet, dass** Mittel zur Generierung einer regelmäßigen Anregungspause in einer Frequenz f zwischen 1 Hz und 100 Hz vorhanden sind.

## Claims

1. Method for operating a dental ultrasound device (1) having an excitation frequency f_{A}, wherein the ultrasound device (1) comprises a handpiece (2), comprising an ultrasonic driver having a variable output frequency, a tool tip (3) driven by the ultrasonic driver, and a control unit (5) for controlling the excitation frequency f_{A} of the ultrasonic drive, wherein, during start-up of the ultrasound device (1), the control unit (5) determines a resonance frequency f_{R} of the ultrasonic driver with the tool tip (3) and adjusts the ultrasonic driver to an excitation frequency f_{A} corresponding to the resonance frequency f_{R}, **characterized in that** an excitation pause is repeatedly inserted during operation for the purpose of determining the resonance frequency f_{R}, wherein the vibration behavior of the tool tip (3) is acquired by the control unit (5) during the excitation pause and the resonance frequency f_{R} is determined from said vibration behavior.

2. Method according to Claim 1, **characterized in that** the excitation pause has a duration of at most 50 ms, at most 10 ms or at most 5 ms.

3. Method according to Claim 1, **characterized in that** an excitation pause is set such that the power loss is at most 50%, at most 10% or at most 5%.

4. Method according to any one of Claims 1 to 3, **characterized in that** the excitation pause and the associated determination of the resonance frequency f_{R} is repeated regularly at a frequency f.

5. Method according to Claim 4, **characterized in that** the frequency f is between 1 Hz and 100 Hz, preferably 15 Hz.

6. Method according to any one of Claims 1 to 5, **characterized in that** the control unit (5) controls an excitation current I and sets a constant current for the ultrasonic driver independent of the excitation frequency f_{A}.

7. Method according to Claim 6, **characterized in that** the current control is achieved by varying the amplitude A of an excitation voltage or by varying a pulse width of the excitation voltage.

8. Method according to any one of Claims 1 to 7, **characterized in that** a Fourier analysis is used to determine the resonance frequency f_{R}, wherein the evaluation of the Fourier analysis for the purpose of determining the resonance amplitudes of the tool tip (3) also provides the determination of the load state of the tool tip (3).

9. Dental ultrasound device (1) having a handpiece (2), comprising an ultrasonic driver having a variable output frequency and a tool tip (3) driven by the ultrasonic driver, and further comprising a control unit (5) for controlling the excitation frequency f_{A} of the ultrasonic drive, **characterized in that** first means (5.1) for generating an excitation pause during operation are present and that second means (5.2) are present as well, via which the vibration behavior of the tool tip (3) can be acquired and analyzed, wherein the first means (5.1) and the second means (5.2) interact with the control unit (5).

10. Dental ultrasound device (1) according to Claim 9, **characterized in that** an excitation pause of at most 50 ms, 10 ms or 5 ms can be set.

11. Dental ultrasound device (1) according to Claim 9 or 10, **characterized in that** means for generating a regular excitation pause are present.

12. Dental ultrasound device (1) according to Claim 11, **characterized in that** means for generating a regular excitation pause at a frequency f between 1 Hz and 100 Hz are present.

## Revendications

1. Procédé d'actionnement d'un dispositif ultrasonore dentaire (1) à l'aide d'une fréquence d'excitation f_{A}, le dispositif ultrasonore (1) comportant une pièce à main (2) comprenant un entraînement ultrasonore à fréquence de sortie modifiable, une pointe d'outil (3) entraînée par l'entraînement ultrasonore et une unité de régulation (5) pour la régulation de la fréquence d'excitation f_{A} de l'entraînement ultrasonore, ladite unité de régulation (5), lors de la mise en service du dispositif ultrasonore (1), déterminant une fréquence de résonance f_{R} de l'entraînement ultrasonore avec la pointe de l'outil (3) et régulant l'entraînement ultrasonore sur une fréquence d'excitation f_{A} correspondant à la fréquence de résonance f_{R}, **caractérisé en ce que,** lors du fonctionnement, une pause d'excitation est appliquée plusieurs fois en vue de la détermination de la fréquence de résonance f_{R}, le comportement oscillatoire de la pointe d'outil (3) étant détecté par l'unité de régulation (5) pendant cette pause d'excitation, pour en déduire la fréquence de résonance f_{R}.

2. Procédé selon la revendication 1, **caractérisé en ce que** la pause d'excitation est effectuée sur une durée de 50 ms maximum, de 10 ms maximum ou de 5 ms maximum.

3. Procédé selon la revendication 1, **caractérisé en ce qu'**une pause d'excitation est réglée de sorte à entraîner une chute de puissance de l'ordre de 50 % maximum, 10 % maximum ou 5 % maximum.

4. Procédé selon une des revendications 1 à 3, **caractérisé en ce que** la pause d'excitation et la détermination de la fréquence de résonance f_{R} qui en découle sont répétées régulièrement avec une fréquence f.

5. Procédé selon la revendication 4, **caractérisé en ce que** la fréquence f se trouve entre 1 Hz et 100 Hz, en étant de préférence de 15 Hz.

6. Procédé selon une des revendications 1 à 5, **caractérisé en ce que** l'unité de régulation (5) régule une intensité d'excitation I et, indépendamment de la fréquence d'excitation f_{A}, ajuste une intensité constante pour l'entraînement ultrasonore.

7. Procédé selon la revendication 6, **caractérisé en ce que** la régulation de l'intensité s'effectue par une variation de l'amplitude A d'une tension d'excitation ou par une variation d'une largeur d'impulsion de la tension d'excitation.

8. Procédé selon une des revendications 1 à 7, **caractérisé en ce qu'**une analyse de Fourier est mise en oeuvre en vue de la détermination de la fréquence de résonance f_{R}, une évaluation de l'analyse de Fourier en vue de déterminer les amplitudes de résonance de la pointe d'outil (3) permettant également de déterminer l'état de charge de la pointe d'outil (3).

9. Dispositif ultrasonore dentaire (1) comportant une pièce à main (2) comprenant un entraînement ultrasonore à fréquence de sortie modifiable et une pointe d'outil (3) entraînée par l'entraînement ultrasonore, et comportant en outre une unité de régulation (5) pour la régulation de la fréquence d'excitation f_{A} de l'entraînement ultrasonore, **caractérisé en ce qu'**il dispose de premiers moyens (5.1) destinés à générer une pause d'excitation pendant le fonctionnement, ainsi que de seconds moyens (5.2) permettant, pendant la pause d'excitation, de détecter et d'évaluer le comportement oscillatoire de la pointe d'outil (3), les premiers moyens (5.1) et les seconds moyens (5.2) coopérant avec l'unité de régulation (5).

10. Dispositif ultrasonore dentaire (1) selon la revendication 9, **caractérisé en ce qu'**une pause d'excitation peut être réglée à 50 ms, 10 ms ou 5 ms maximum.

11. Dispositif ultrasonore dentaire (1) selon la revendication 9 ou 10, **caractérisé en ce qu'**il dispose de moyens de génération d'une pause d'excitation régulière.

12. Dispositif ultrasonore dentaire (1) selon la revendication 11, **caractérisé en ce qu'**il dispose de moyens de génération d'une pause d'excitation régulière à une fréquence f comprise entre 1 Hz et 100 Hz.
